# EUROPEAN PATENT APPLICATION

(11) **EP 3 621 209 A1**
(43) Date of publication of application: **11.03.2020**
(21) Application number: 18465569.4
(22) Date of filing: 04.09.2018
(51) Int. Cl.: H04B 5/00

(54) **SYSTEM FOR DRIVING AN NFC ANTENNA AND AN LED**

(71) Applicant: Continental Automotive GmbH, 30165 Hannover (DE)
(72) Inventor: Craciun, Serban, 300687 Timisoara (RO); Ionescu, Ioana Sabina, 331042 Hunedoara (RO)

(57) **Abstract**

The invention relates to an NFC antenna system or NFC-system, particularly to an NFC antenna system for a vehicle, which is purposefully combined with a lighting system for comfortable access to an NFC system. The NFC-system(100) comprises an NFC driver system (200), comprising a balanced-output NFC driver (210), comprising a first NFC driver output (211) and a second NFC driver output (212), and a balun (220), comprising a first balun-coil (L211), whose first end is connected to the first NFC driver output (211) and whose second end is connected to ground, and a second balun-coil (L222), whose first end is connected to the second NFC driver output (212) and whose second end is connected to ground, wherein the first end of the first balun-coil (L211) is connected to a common output node (390) . The NFC-system further comprises an LED driver system (300), comprising an LED driver (310), which is connected, via a low-pass filter (320), to the common output node (390), a coaxial cable (400), where a first end (401) of the coaxial cable (400) is connected to the common output node (390), and a second end (402) of the coaxial cable (400) is connected to a common input node (490). In addition, the NFC-system (100) comprises an NFC antenna system (500), comprising an NFC antenna (510), which is connected to the common input node (490), and an LED light system (600), comprising an LED (610), which is connected, via a low-pass filter (320), to the common input node (490).

## Description

The invention relates to an NFC antenna system or NFC-system, particularly to an NFC antenna system for a vehicle, for instance to communicate with a locking system for a vehicle. More specifically, present invention relates to an NFC system, which is purposefully combined with a lighting system for comfortable access to an NFC system.

An NFC antenna system is used, for instance, to transfer information between devices, particularly over short distances, in many cases over distances less than 10 cm. This is a security feature, and has a plethora of applications running on this basis. In many systems, a connection between the NFC antenna and a NFC control system is achieved via a twisted-pair cable, which limits the distance between said system to a range usually not higher than 60 cm. However, when applying such a system to a vehicle, there may be a demand for a longer distance between the NFC antenna and the NFC control system, e.g. due to constraints caused by temperature and/or placing.

Therefore, it is object of the invention to overcome the drawbacks of state of the art at least partly. This object is solved by the independent claims. Further advantageous embodiments can be found in the dependent claims, description, and drawings.

A first aspect of this invention relates to a NFC-system for driving an NFC antenna and an LED for a vehicle. The system comprises an NFC driver system, comprising a balanced-output NFC driver, comprising a first NFC driver output and a second NFC driver output, and a balun, comprising a first balun-coil, whose first end is connected to the first NFC driver output and whose second end is connected to ground, and a second balun-coil, whose first end is connected to the second NFC driver output and whose second end is connected to ground, wherein the first end of the first balun-coil is connected to a common output node. The system further comprises an LED driver system, comprising an LED driver, which is connected, via a low-pass filter, to the common output node. Furthermore, the system comprises a coaxial cable, where a first end of the coaxial cable is connected to the common output node, and a second end of the coaxial cable is connected to a common input node. Moreover, the system comprises an NFC antenna system, comprising an NFC antenna, which is connected, to the common output node. And, the system comprises an LED light system, comprising an LED, which is connected, via a low-pass filter, to the common output node, so that both an NFC signal and an LED are transferable via the coaxial cable.

The system is configured for driving an NFC antenna and an LED for a vehicle. The NFC antenna is a kind of terminal-point for exchanging data between at least two NFC systems. When applied to a vehicle, the NFC systems may be used inside the vehicle or close to the outer surface of the vehicle, e.g. for getting information about some states of the car, transferring a broad range of information, and/or performing security-relevant tasks, such as locking or unlocking the vehicle. The vehicle may be a car, a truck, a bus, a special vehicle such as an amphibian or special-load vehicle, but may as well be a boat or an airplane.

The NFC-system comprises an NFC driver system. The NFC driver system creates a connection between the NFC-system and an information-system, e.g. to a car-control system, a car information system, but may also connect to a remote system, such as a cloud-based system. So, the NFC-system comprises a balanced-output NFC driver, which may be connected to one or more of those information-systems. One example for an NFC driver may be one member of the NCx3340 NFC Controller family, manufactured e.g. by NXP. The balanced-output NFC comprises a first NFC driver output and a second NFC driver output. Some balanced-output NFC drivers may be optimized to connect their driver outputs directly to a twisted-pair cable. However, twisted-pair cables are limited in their range, i.e. in the length within which they can be used reasonably. For longer distances, a different cable is required.

The present invention uses a coaxial cable, because these provide a longer range or cable-length, within which their use is feasible. Furthermore, they have a good behavior even in tough environment, e.g. in environments with high EMC-emissions. But, both the impedance-requirements are different to twisted-pair cables' requirements. In addition, the coaxial cable requires an unbalanced-output. To cope with this, the NFC driver system comprise a balun (balun: "balanced-unbalanced"), i.e. a transformation system to adapt the balanced-output NFC driver to an unbalanced device, such as the coaxial cable. The balun comprises a first balun-coil and a second balun-coil. The first end of the first balun-coil is connected to the first NFC driver output and the second end is connected to ground. The second balun-coil has its first end connected to the second NFC driver output and its second end connected to ground. Furthermore, the first end of the first balun-coil is connected to a common output node. This sub-circuit provides an effective way to adapt the balanced-output NFC driver to the unbalanced coaxial cable. Consequently, the common output node can be used as a well-adapted input for the coaxial cable. The wording "common output node" reflects the fact that more than one sub-system is connected to this node.

The NFC-system further comprises an LED driver system. The LED driver system fulfils a demand of high practical benefit: Since the NFC-system requires - per definition - the user to be quite close to the antenna, the localization of the NFC-system's terminal may become cumbersome in dark environments. The present invention also copes with this demand, by comprising an LED driver. The LED driver is connected, via a low-pass filter, to the common output node. Thus, the energy provided by the LED driver can be brought to the input for the coaxial cable, along with the signals from the NFC driver system.

The NFC-system further comprises a coaxial cable, where a first end of the coaxial cable is connected to the common output node, and a second end of the coaxial cable is connected to a common input node. The coaxial cable brings a broad range of benefits: Firstly, it overcomes the range-limit of other connecting-cables, particularly the it overcomes 60 cm-limit of twisted-pair cables. Further, coaxial cables are widely used and are available in a broad range of specifications. And, they offer good quality in several aspects, e.g. concerning signal-noise-ratio, transmission bandwidth, robustness, and others.

The NFC-system further comprises an NFC antenna system, comprising an NFC antenna, which is connected to the common input node. The NFC antenna operates as the terminal of the NFC-system, interacting with a corresponding NFC-device, e.g. with a smart-phone or an RFID-chip. Some NFC antennas have quite strict requirements concerning the NFC antenna's impedance. In this case, an impedance adaption sub-system may be arranged between the common input node and the NFC antenna.

The NFC-system further comprises an LED light system, comprising an LED, which is connected, via a low-pass filter, to the common input node. This is an effective way to separate the LED's power consumption from the NFC signals, with low disturbance among these sub-systems.

Hence, the invention leads to the effect that both an NFC signal and an LED are transferable via the coaxial cable. This brings the benefit of higher flexibility and also of a reduction of the numbers of cables required for a system. This is particularly desirable for electric systems in vehicles, but this demand is also common for other kind of electric systems. Furthermore, this system is not limited to a supply of light. Moreover, here, the term "LED" means any device, whose specification is compatible - e.g. in voltage and power consumption - with an LED.

In one embodiment, the NFC antenna system comprises an RC-circuit, which is configured to adapt the impedance of the NFC antenna to 50 ohms. A good impedance-adaptation brings benefits e.g. in terms of better transfer-quality, e.g. to the corresponding NFC-device.

In one embodiment, the NFC driver system comprises a low-pass filter system, which is arranged between the balanced-output NFC driver and the balun, and is configured to adapt the impedance of the NFC driver to a range between 60 and 70 ohms. This brings the benefits caused by good impedance-adaptation.

In one embodiment, the low-pass filter system comprises a first low-pass filter, which is arranged between the first NFC driver output and the first balun-coil, and a second low-pass filter, which is arranged between the second NFC driver output and the second balun-coil.

In one embodiment, the LED light system further comprises a rectifier. This opens the NFC-system of the present invention to a plethora of further applications. For instance, the NFC terminal may be led to a vehicle's interior, possibly to make use of an NFC-system that supports payment. This end of the coaxial cable, however, can not only be used for lighting some areas of the vehicle's interior, but, using the rectifier, for plugging devices like a loader (e.g. for smart-phone), a computer, or the like.

In one embodiment, the NFC driver system uses a frequency-range different to the frequency-range of the LED driver system. This brings a clear separation of the devices in terms of frequency and thus reduces the signal-noise-ratio, crosstalk and/or other interference of the sub-systems.

In one embodiment, the coaxial cable has a length between 60 and 400 cm. This overcomes the range-limit of other connecting-cables, particularly the it overcomes 60 cm-limit of twisted-pair cables.

A first aspect of this invention relates to a use of a system as described above for a locking system, particularly of a vehicle, a combined information-light-environment, or a combined environment of information-transfer and energy-support of small devices. Hence, the applications include, but are not limited to light systems. Particularly when using a rectifier, the system supports a lot of use cases.

For further explanation, the invention is described by means of embodiment as shown in the figures. The following embodiments only serve as examples, but have no limiting purpose.

The figures depict in:
Fig. 1 an example of an NFC-system;
Fig. 2 an example of an NFC-system according to one of the embodiments of the present invention.

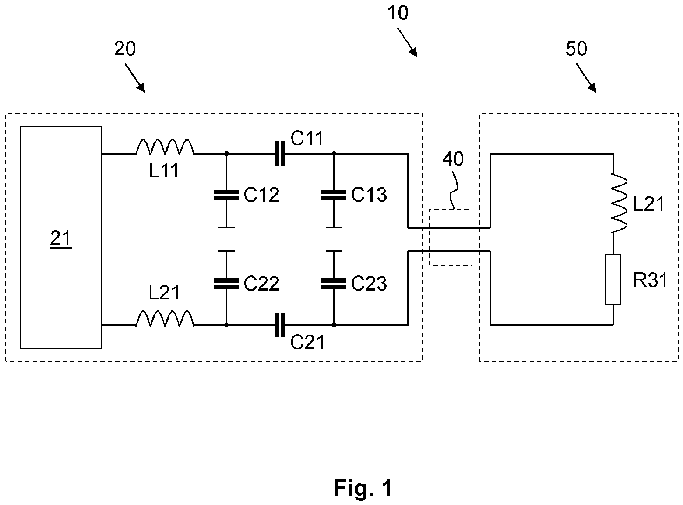

The NFC-system 10 of Fig. 1 depicts an NFC driver system 20 and an NFC antenna system 50, which are connected by a cable, e.g. by a twisted-pair cable 40. The NFC driver system 20 comprises a balanced-output NFC driver 21, whose outputs are connected to symmetrical low-pass filters L11 plus C12 or L21 plus C22, respectively. The low-pass filters are followed by serial capacitors C11, C21 and parallel capacitors C13, C23. This filter- and adaptation-sub-circuit is followed by a cable 40, e.g. a twisted-pair cable. On the other side of the cable 40, the NFC antenna system 50 is arranged, comprising an NFC antenna L21 and a resistor R31, for adaptation purposes. This system may support a lot of applications. However, in some cases it only provides a quite limited distance-range. In addition, it is limited to transfer NFC-based information.

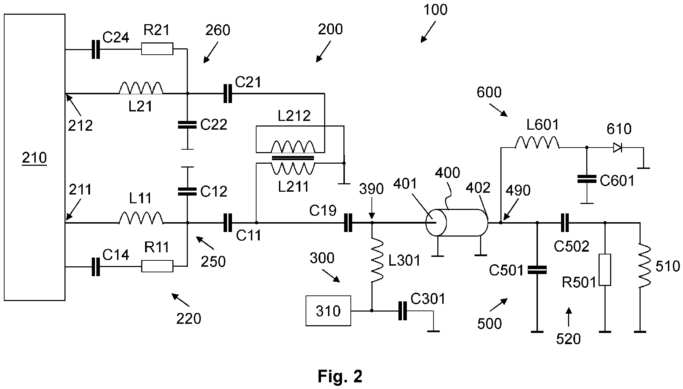

Fig. 2 depicts an NFC-system 100 for a broader range of use-cases, e.g. for driving an NFC antenna and an LED for a vehicle, including the bridging of longer distances. The NFC-system 100 comprises an NFC driver system 200, an LED driver system 300, a coaxial cable 400, an NFC antenna system 500, and an LED light system 600.

The NFC driver system 200, comprises a balanced-output NFC driver 210, comprising a first NFC driver output 211 and a second NFC driver output 212. Furthermore, it comprises a balun 220 (balun: "balanced-unbalanced"), i.e. a transformation system to adapt the balanced-output NFC driver to an unbalanced device, such as the coaxial cable. The balun 220 comprises a first balun-coil L211, whose first end is connected to the first NFC driver output 211 and whose second end is connected to ground, and a second balun-coil L212, whose first end is connected to the second NFC driver output 212 and whose second end is connected to ground. In the circuit shown, the first end of the first balun-coil L211, is not directly connected to the first NFC driver output 211. Instead, a low-pass filter system 220, comprising L11 and C12 is arranged between the balanced-output NFC driver 210 and the balun 220; this is configured to adapt the impedance of the NFC driver 210 to a range between 60 and 70 ohms. This can be applied, analogously, to the connection between the second balun-coil L212 and the second NFC driver output 212. C19 is for a DC-separation of the NFC driver system 200 and connects the first end of the first balun-coil L211 to a common output node 390.

The NFC-system 100 further has an LED driver system 300, comprising an LED driver 310, which is connected, via a low-pass filter 320, to the common output node 390, a coaxial cable 400. The low-pass filter 320 comprises L301 and C301. The common output node 390 is connected to a first end 401 of the coaxial cable 400. The coaxial cable 400 is unbalanced and has its shielding connected to ground. The coaxial cable 400 may comprise a length up to 400 cm. The side of the common output node 390 may be arranged on a central place of a vehicle.

The coaxial cable 400 has a second end 402 connected to a common input node 490. The common input node 490 is arranged close to the NFC terminal area. The common input node 490 is connected to an NFC antenna system 500 and an LED light system 600. The NFC antenna system 500 comprises an NFC antenna 510, which is connected to the common input node 490. In this embodiment, an RC-circuit 520 is arrange between the common input node and the NFC antenna 510. The RC-circuit 520 is configured to adapt the impedance of the NFC antenna 510 to 50 ohms. The LED light system 600, comprising an LED 610, which is connected, via a low-pass filter 320, to the common input node 490. In one embodiment, the LED light system 600 may comprise, in addition to or instead of LED 610, a rectifier. This may further increase the range of applications this invention is suitable for.

### List of Reference Signs:

- 10: NFC-system
- 20: driver system
- 21: NFC driver
- 40: cable
- 50: antenna system
- 100: NFC-system
- 200: driver system
- 210: NFC driver
- 211, 212: NFC driver output
- 220: balun
- 300: driver system
- 310: LED driver
- 320: low-pass filter
- 390: common output node
- 400: coaxial cable
- 401: first end of coaxial cable
- 402: second end of coaxial cable
- 490: common input node
- 500: antenna system
- 510: NFC antenna
- 520: RC-circuit
- 600: light system
- 610: LED
- C11, C21, ...: capacitors
- L11, L21, ...: inductors
- L211, L212: first and second balun-coil
- R11, R21, ...: resistors

## Claims

1. An NFC-system (100) for driving an NFC antenna and an LED for a vehicle, comprising:
an NFC driver system (200), comprising
a balanced-output NFC driver (210), comprising a first NFC driver output (211) and a second NFC driver output (212), and
a balun (220), comprising a first balun-coil (L211), whose first end is connected to the first NFC driver output (211) and whose second end is connected to ground, and a second balun-coil (L222), whose first end is connected to the second NFC driver output (212) and whose second end is connected to ground,
wherein the first end of the first balun-coil (L211) is connected to a common output node (390),
an LED driver system (300), comprising an LED driver (310), which is connected, via a low-pass filter (320), to the common output node (390),
a coaxial cable (400), where
a first end (401) of the coaxial cable (400) is connected to the common output node (390), and
a second end (402) of the coaxial cable (400) is connected to a common input node (490),
an NFC antenna system (500), comprising
an NFC antenna (510), which is connected to the common input node (490), and
an LED light system (600), comprising an LED (610), which is connected, via a low-pass filter (320), to the common input node (490),
so that both an NFC signal and an LED are transferable via the coaxial cable (400).

2. The NFC-system (100) according to claim 1,
wherein the NFC antenna system (500) comprises an RC-circuit (520), which is configured to adapt the impedance of the NFC antenna (510) to 50 ohms.

3. The NFC-system (100) according to claim 1 or 2,
where the NFC driver system (200) comprises a low-pass filter system (220), which is arranged between the balanced-output NFC driver (210) and the balun (220), and is configured to adapt the impedance of the NFC driver (210) to a range between 60 and 70 ohms.

4. The NFC-system (100) according to claim 3,
wherein the low-pass filter system (220) comprises a first low-pass filter (250), which is arranged between the first NFC driver output (211) and the first balun-coil (L211), and
a second low-pass filter (260), which is arranged between the second NFC driver output (212) and the second balun-coil (L212).

5. The NFC-system (100) according to any one of the preceding claims,
where the LED light system (600) further comprises a rectifier.

6. The NFC-system (100) according to any one of the preceding claims,
where the NFC driver system (200) uses a frequency-range different to the frequency-range of the LED driver system (300) .

7. The NFC-system (100) according to any one of the preceding claims,
where the coaxial cable (400) has a length between 60 and 400 cm.

8. Use of an NFC-system (100) according to any one of the preceding claims for a locking system, particularly for a locking system of a vehicle, a combined information-light-environment, or a combined environment of information-transfer and energy-support of a device.
